# EUROPÄISCHE PATENTSCHRIFT

(11) **EP 2 311 626 B1**
(45) Veröffentlichungstag und Bekanntmachung des Hinweises auf die Patenterteilung: **16.05.2012**
(21) Anmeldenummer: 10013404.8
(22) Anmeldetag: 07.10.2010
(51) Int. Cl.: B29C 53/78, H02G 15/18, B29C 61/06

(54) **Stützwendel**
Plastic hose
Hélice d'appui

(30) Priorität: 16.10.2009 DE 202009014120 U
(43) Veröffentlichungstag der Anmeldung: 20.04.2011
(73) Patentinhaber: REHAU AG + Co, 95111 Rehau (DE)
(72) Erfinder: Nachtrab, Markus, 91596 Burk (DE)

(56) Entgegenhaltungen:
- EP-A1- 1 835 591
- WO-A1-00/62992

## Beschreibung

Die Erfindung betrifft eine Stützwendel mit einem spiralförmig gewickelten Profilband, das entlang einer von benachbarten Profilbandabschnitten gebildeten, spiralförmigen Kontaktfläche unter Bildung mindestens einer Schweißnaht verschweißt ist und hierdurch einen zumindest im wesentlichen zylindrischen Hohlraum bildet, wobei das Profilband im Bereich der Schweißnaht mit mindestens einer Funktionsschicht versehen ist.

Stützwendeln beispielsweise in der Elektroindustrie als Bestandteile eines Kaltschrumpfsystems eingesetzt. Über die Stützwendel wird eine Kaltschrumpfhülse gezogen, welche im Allgemeinen aus einem Spritzguss- oder Extrusionsteil aus Silikon oder Gummi besteht. Dabei wird die Kaltschrumpfhülse in einem ersten Schritt aufgeweitet und über die Stützwendel gezogen. Die Hülse schrumpft dann bis auf den Außendurchmesser der Stützwendel auf. Die Stützwendel dient zur Verhinderung eines weiteren Zusammenschrumpfens der Kaltschrumpfhülse während einer Lagerung bzw. während eines Transportes. Auf einer Baustelle wird die Kaltschrumpfhülse mit der darin befindlichen Stützwendel beispielsweise über ein offenes Kabelende einer in der Erde verlegten Starkstromleitung gezogen. Anschließend wird das Kabelende mit einem weiteren Kabelende über einen Kabelschuh verbunden. Die Kaltschrumpfhülse mit der darin befindlichen Stützwendel wird über die Kabelverbindungsstelle gebracht. Darauf folgend wird die Stützwendel aus der Kaltschrumpfhülse herausgezogen, indem die Schweißverbindung benachbarter Profilbandabschnitte sukzessive wieder aufgebrochen wird. Nach Entfernen des Profilbandes schrumpft die Kaltschrumpfhülse auf die Kabelverbindung auf und schützt diese vor Feuchtigkeit und Verschmutzung.

Aus der Patentschrift DE 101 64 367 C1 ist eine Stützwendel bekannt, bei der teilvernetztes Material zum Einsatz kommt. Das Verschweißen im Bereich der Kontaktfläche erfolgt durch lokales Aufschmelzen im entsprechenden Querschnittsbereich des Profilbandes, wobei zwecks Unterstützung des Schweißvorgangs zusätzlich ein axialer Druck aufgebracht werden kann. Die bekannte Herstellung einer Stützwendel hat sich in der Praxis bewährt.

Allerdings weist dieser Stand der Technik auch gewisse Nachteile auf. So führen beispielsweise geringfügige Abweichungen hinsichtlich der Temperatur während des Schweißvorgangs, der Heizzeit, des Vernetzungsgrades des üblicherweise aus Kunststoff extrudierten Profilbandmaterials und auch hinsichtlich der Profilgeometrie zu vergleichsweise stark schwankenden Schweißergebnissen und damit zu ebenso stark schwankenden Trennkräften, die zum Aufbrechen der Stützwendel entlang der Kontaktfläche erforderlich sind. Bei zu geringen Trennkräften zum Zerstören der Schweißverbindung kann durch die Schrumpfkraft der Kaltschrumpfhülse die Verbindung ungewollt aufgebrochen werden, so dass die Kaltschrumpfhülse schon vor ihrer Montage auf der Baustelle zusammenschrumpft und damit unbrauchbar wird. Bei zu hohen Trennkräften entlang der Schweißverbindung ist hingegen eine Entfernung der Stützwendel aus der Kaltschrumpfhülse nur erschwert bzw. gar nicht möglich, so dass auch hier die gewünschte Funktion des Verbundbauteils, bestehend aus Stützwendel und Kaltschrumpfhülse, nicht mehr gewährleistet ist.

Bei einem Verschweißen durch Kontaktwärme wird das Profilband üblicherweise auf einen Wickeldorn aufgewickelt und fixiert. Im Anschluss daran wird der Wickeldorn mit dem darauf aufgewickelten und fixierten Profilband auf einen Heizdorn aufgesteckt. Dieser wird auf eine bestimmte Temperatur aufgeheizt und gibt entsprechend Wärme an den Wickeldorn und somit schließlich an das aufgewickelte Profilband ab. Das Profilband wird durch diesen Wärmeeintrag lokal bis zu seinem Schmelzpunkt erhitzt. Nach einer vordefinierten Zeit wird der Wickeldorn vom Heizdorn entfernt und abgekühlt. Nachdem dieser abgekühlt ist, wird die Fixierung des Profilbandes gelöst und der Wickeldorn aus dem nunmehr zur Stützwendel verschweißten Profilband herausgedrückt. Um die Stützwendel auf der Baustelle aus der Kaltschrumpfhülse wieder entfernen zu können, darf die Trennkraft der Verbindungsstellen einen bestimmten Wert nicht überschreiten, welcher üblicherweise im Bereich von ca. 60 N angesiedelt ist. Diese Trennkraft wird durch den Verschweißungsgrad der benachbarten Profilbandabschnitte beeinflusst.

Eine Stützwendel mit den eingangs beschriebenen Merkmalen ist aus der EP 1 835 591 A1 bekannt. Die Funktionsschicht dient zur Laserverschweißung. Zum Material der Funktionsschicht werden keine näheren Angaben gemacht.

Vor dem Hintergrund der beschriebenen Problematik besteht die der Erfindung zu Grunde liegende Aufgabe darin, eine Stützwendel anzugeben, die die Einstellung einer gleichmäßigen und präzisen Zerstörungs-Trennkraft ermöglicht.

Ausgehend von einer Stützwendel mit den eingangs beschriebenen Merkmalen wird die Aufgabe erfindungsgemäß dadurch gelöst, dass das Material der Funktionsschicht einen niedrigeren Schmelzpunkt bzw. Schmelzbereich aufweist als das Material des Profilbandes. Durch das Vorsehen der niedrig schmelzenden Funktionsschicht ist gewährleistet, dass nur das Funktionsschicht-Material im Schweißnahtbereich während des eingangs beschriebenen Aufheizvorganges aufgeschmolzen wird, während das aus einem Material mit höherem Schmelzpunkt bzw. Schmelzbereich bestehende Profilband beim Schweißvorgang im festen Zustand verharrt. Vorzugsweise besitzt das Profilband einen Schmelzpunkt bzw. Schmelzbereich von 110°C bis 150 °C, z.B 120 bis 140 °C, während der Schmelzpunkt bzw. Schmelzbereich der Funktionsschicht zwischen 70 und 95 °C liegt. Bei einer Aufheizung des Wickeldornes auf beispielsweise 95 °C bis 110 °C, vorzugsweise ca. 100 °C, wird entsprechend nur das Material der Funktionsschicht aufgeschmolzen. Dies erlaubt insgesamt die Einstellung einer über die Profilbandlänge sehr gleichmäßigen Abzugskraft beim Zerstören der Stützwendel. Die Höhe der Abzugskraft selbst kann hierbei z. B. über die Breite der Funktionsschicht eingestellt werden.

Vorzugsweise ist die Funktionsschicht im verschweißten Zustand im Wesentlichen radial zur Achse des zylindrischen Hohlraums ausgerichtet. Zweckmäßigerweise erfolgt die Anordnung der Funktionsschicht derart, dass sie im verschweißten Zustand in dem dem zylindrischen Hohlraum zugewandten Innenrandbereich der Stützwendel angeordnet ist. Hierdurch ist sichergestellt, dass die vom Wickeldorn an die Stützwendel übertragene Wärme direkt in den zu verschweißenden Bereich des Profilbandes fließt und damit eine vergleichsweise kurze Heizdauer zur Verschweißung des Profilbandes ausreicht. Alternativ hierzu kann sich jedoch die Funktionsschicht auch über den gesamten radialen Randbereich des Profilbandes erstrecken bzw. auch lediglich im radial gesehen äußeren und/oder mittleren Bereich des Profilbandes angeordnet sein.

Vorzugsweise besteht das Profilband aus einem Polyolefin, z.B. Polyethylen, insbesondere einem unvernetzten Polyethylen. Gemäß der erfindungsgemäßen Lehre ist es nicht mehr erforderlich, als Profilbandmaterial ein vernetztes Polyethylen zu verwenden. Der Einsatz von vernetztem Polyethylen soll jedoch hierdurch nicht ausgeschlossen sein. Zweckmäßigerweise besteht auch die Funktionsschicht aus einem Polyolefin, insbesondere Polyethylen. Sofern sowohl Profilband als auch Funktionsschicht aus Polyethylen bestehen, wird entsprechend für die Funktionsschicht ein niedrig schmelzendes Polyethylen und für das Profilband ein im Vergleich dazu höher schmelzendes Polyethylen eingesetzt. Geeignete alternative Materialien für Funktionsschicht und/oder Profilband sind z.B. Polypropylen und Polyamid sowie auch Mischungen der genannten Martialien (z.B. PE/PA, PE/PP, PA/PP).

Das Profilband kann im Querschnitt ein Hohlkammerprofil aufweisen. Im Rahmen der Erfindung liegt es ebenfalls, dass das Profilband mindestens einen in die Hohlkammer hineinragenden Vorsprung aufweist. Dieser Vorsprung kann beispielsweise zur Kennzeichnung des Herstellers der Stützwendel dienen.

Gemäß einer bevorzugten Ausführungsform der Erfindung weist das Profilband im Querschnitt Hinterschnitte auf, so dass im verschweißten Zustand des Profilbandes benachbarte Profilbandabschnitte ineinandergreifen. Durch diese Gestaltung kann ein Formschluss zwischen im gewickelten Zustand benachbarten Profilbandabschnitten gewährleistet werden, so dass beispielsweise ein Ineinanderhaken der entsprechenden Abschnitte erfolgt. Durch eine solche Gestaltung kann die Abzugskraft der Stützwendel gezielt erhöht werden, da nun beim Zerstören der Stützwendel neben dem Stoffschluss aufgrund der Funktionsschicht zusätzlich der beschriebene Formschluss überwunden werden muss.

Vorzugsweise weist das Profilband an seiner im verschweißten Zustand dem zylindrischen Hohlraum zugewandten Seite eine Bedruckung, vorzugsweise eine Ink-Jet-Bedruckung, auf. Diese Bedruckung kann beispielsweise zur Angabe von Artikelnummer, Spulennummer, Fertigungsdatum, Chargennummer etc. dienen. Gemäß einer besonders bevorzugten Ausführungsform der Erfindung ist die Funktionsschicht mit dem Profilband koextrudiert. Hierdurch wird die Fertigung der Stützwendel deutlich vereinfacht.

Zweckmäßigerweise sind mindestens zwei Funktionsschichten vorgesehen, die im Schweißnahtbereich beidseitig am Profilband angeordnet sind. Dies führt dazu, dass entsprechend beim Verschweißen benachbarter Profilbandabschnitte beidseitig jeweils nur niedrig schmelzendes Funktionsschicht-Material aufgeschmolzen und somit beim Schweißen keine Verbindung zwischen niedrig schmelzendem Funktionsschicht-Material und höher schmelzendem Profilband-Material hergestellt werden muss.

Die Funktionsschicht kann gegenüber dem Profilband farblich abgesetzt sein. So ist es beispielsweise möglich, dass das Profilband aus einem transparenten Material besteht, während die Funktionsschicht weiß eingefärbt ist. Die Funktionsschicht besitzt zweckmäßigerweise eine Breite von 0,5 mm bis 3 mm, vorzugsweise von 1,5 mm bis 2,5 mm. Die Dicke der Funktionsschicht bewegt sich zweckmäßigerweise in einem Bereich von 0,1 mm bis 1,0 mm.

Im Folgenden wird die Erfindung anhand einer lediglich ein Ausführungsbeispiel darstellenden Zeichnung ausführlich erläutert. Es zeigen schematisch:
- Fig. 1: eine erfindungsgemäße Stützwendel,
- Fig. 2: ein Profilband zur Herstellung einer erfindungsgemäßen Stützwendel gemäß Fig. 1 in der Querschnittsdarstellung,
- Fig. 3: eine alternative Ausführungsform der Erfindung in einer der Fig. 2 entspre- chenden Darstellung und
- Fig. 4: eine der Fig. 3 entsprechende Darstellung von benachbarten und miteinander verschweißten Profilbandabschnitten.

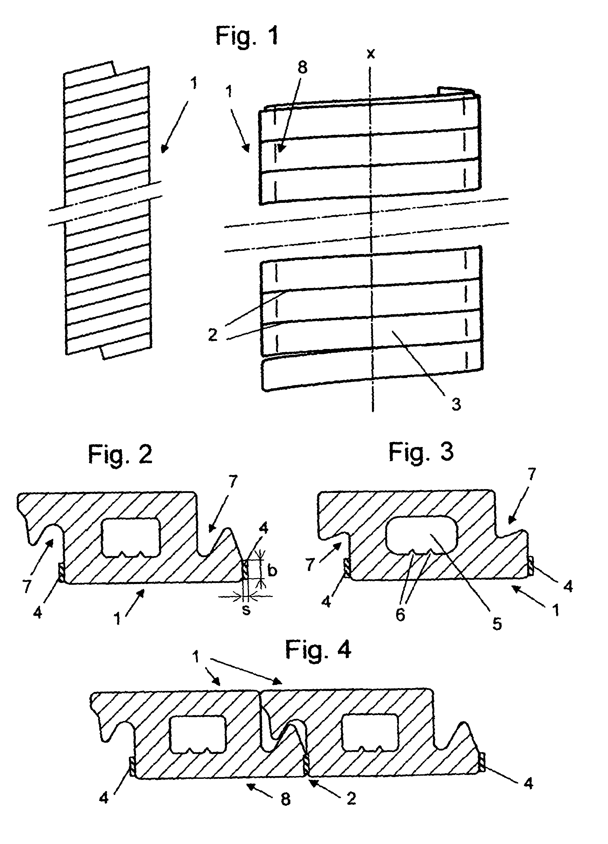

In Fig. 1 ist eine erfindungsgemäße Stützwendel dargestellt. Diese weist ein spiralförmig gewickeltes Profilband 1 aus Kunststoff auf, das entlang einer von benachbarten Profilbandabschnitten gebildeten, spiralförmigen Kontaktfläche unter Bildung einer Schweißnaht 2 verschweißt ist und hierdurch einen zylindrischen Hohlraum 3 bildet. Bei einer vergleichenden Betrachtung der Figuren 2 bis 4 ist zu entnehmen, dass das Profilband 1 im Bereich der Schweißnaht 2 mit zwei aus Kunststoff bestehenden Funktionsschichten 4 versehen ist, die im Schweißnahtbereich beidseitig am Profilband 1 angeordnet sind. Das Material der Funktionsschichten 4 weist einen niedrigeren Schmelzpunkt bzw. Schmelzbereich auf als das Material des Profilbandes 1. Hierdurch ist es möglich, dass zur Herstellung der Schweißverbindung lediglich niedrig schmelzendes Funktionsschicht-Material aufgeschmolzen werden muss, während das Profilband-Material vollständig im festen Zustand verharrt. Die Funktionsschichten 4 sind im verschweißten Zustand im Wesentlichen radial zur Achse (x) des zylindrischen Hohlraums ausgerichtet (s. Fig. 1).

Bei dem in den Fig. 2 bis 4 dargestellten Ausführungsbeispiel sind die Funktionsschichten 4 im verschweißten Zustand lediglich in dem dem zylindrischen Hohlraum 3 zugewandten Innenrandbereich 8 der Stützwendel angeordnet. Alternativ hierzu können jedoch sich die Funktionsschichten 4 auch über den gesamten radialen Randbereich des Profilbandes 1 erstrecken bzw. auch lediglich im radial gesehen äußeren und/oder mittleren Bereich des Profilbandes 1 angeordnet sein.

Im Ausführungsbeispiel bestehen sowohl das Profilband 1 als auch die Funktionsschichten 4 aus unvernetztem Polyethylen, wobei es sich bei dem Material der Funktionsschichten 4 um ein gegenüber dem Polyethylen des Profilbandes 1 niedriger schmelzendes Polyethylen handelt.

Wie den Figuren 2 bis 4 zu entnehmen ist, weist das Profilband 1 im Querschnitt ein Hohlkammerprofil auf. Ferner besitzt das Profilband 1 zwei in die Hohlkammer 5 hineinragende Vorsprünge 6, die der Hersteller-Kennzeichnung dienen. Darüber hinaus weist das Profilband 1 an seiner im verschweißten Zustand dem zylindrischen Hohlraum 3 zugewandten Seite eine Ink-Jet-Bedruckung auf (nicht näher dargestellt).

Die Figuren 2 bis 4 zeigen ferner, dass das Profilband 1 im Querschnitt Hinterschnitte 7 aufweist, so dass im verschweißten Zustand des Profilbandes 1 benachbarte Profilbandabschnitte ineinandergreifen. Hierdurch wird ein Ineinanderhaken benachbarter Profilabschnitte gewährleistet, so dass ein Formschluss entsteht. Dieser Formschluss dient zur gezielten Erhöhung der Abzugskraft, die zur Zerstörung der Stützwendel erforderlich ist.

Die Funktionsschichten 4 sind im Ausführungsbeispiel mit dem Profilband 1 koextrudiert. Die Funktionsschichten 4 sind ferner gegenüber dem Profilband farblich abgesetzt, indem das Profilband 1 aus einem transparenten Material besteht, während die Funktionsschichten 4 weiß eingefärbt sind. Die Funktionsschichten 4 besitzen eine Breite b von 0,5 mm bis 3 mm, vorzugsweise 1,5 mm bis 2,5 mm. Die Dicke s der Funktionsschichten 4 bewegt sich im Bereich von 0,1 mm bis 1,0 mm, vorzugsweise von 0,2 mm bis 0,7 mm, besonders bevorzugt von 0,2 mm bis 0,3 mm.

## Patentansprüche

1. Stützwendel mit einem spiralförmig gewickelten Profilband (1), das entlang einer von benachbarten Profilbandabschnitten gebildeten spiralförmigen Kontaktfläche unter Bildung mindestens einer Schweißnaht (2) verschweißt ist und hierdurch einen zumindest im wesentlichen zylindrischen Hohlraum (4) bildet, wobei das Profilband (1) im Bereich der Schweißnaht (2) mit mindestens einer Funktionsschicht (4) versehen ist, **dadurch gekennzeichnet, dass** das Material der Funktionsschicht (4) einen niedrigeren Schmelzpunkt bzw. Schmelzbereich aufweist als das Material des Profilbandes (1).

2. Stützwendel nach Anspruch 1, **dadurch gekennzeichnet, dass** die Funktionsschicht (1) im verschweißten Zustand im Wesentlichen radial zum zylindrischen Hohlraum (3) ausgerichtet ist.

3. Stützwendel nach Anspruch 1 oder 2, **dadurch gekennzeichnet, dass** die Funktionsschicht (1) im verschweißten Zustand in dem dem zylindrischen Hohlraum (3) zugewandten Innenrandbereich der Stützwendel angeordnet ist.

4. Stützwendel nach einem der Ansprüche 1 bis 3, **dadurch gekennzeichnet, dass** das Profilband (1) aus einem Polyolefin, vorzugsweise Polyethylen, besteht.

5. Stützwendel nach einem der Ansprüche 1 bis 4, **dadurch gekennzeichnet, dass** die Funktionsschicht (4) aus einem Polyolefin, vorzugsweise Polylethylen, besteht.

6. Stützwendel nach einem der Ansprüche 1 bis 5, **dadurch gekennzeichnet, dass** das Profilband (1) im Querschnitt ein Hohlkammerprofil aufweist.

7. Stützwendel nach Anspruch 6, **dadurch gekennzeichnet, dass** das Profilband (1) mindestens einen in die Hohlkammer (5) hineinragenden Vorsprung (6) aufweist.

8. Stützwendel nach einem der Ansprüche 1 bis 7, **dadurch gekennzeichnet, dass** das Profilband (1) im Querschnitt Hinterschnitte (7) aufweist, so dass im verschweißten Zustand des Profilbandes (1) benachbarte Profilbandabschnitte ineinandergreifen.

9. Stützwendel nach einem der Ansprüche 1 bis 8, **dadurch gekennzeichnet, dass** das Profilband (1) an seiner im verschweißten Zustand dem zylindrischen Hohlraum (3) zugewandten Seite eine Bedruckung, vorzugsweise eine Ink-Jet-Bedruckung, aufweist.

10. Stützwendel nach einem der Ansprüche 1 bis 9, **dadurch gekennzeichnet, dass** die Funktionsschicht (4) mit dem Profilband (1) koextrudiert ist.

11. Stützwendel nach einem der Ansprüche 1 bis 10, **dadurch gekennzeichnet, dass** mindestens zwei Funktionsschichten (4) vorgesehen sind, die im Schweißnahtbereich beidseitig am Profilband (1) angeordnet sind.

12. Stützwendel nach einem der Ansprüche 1 bis 11, **dadurch gekennzeichnet, dass** die Funktionsschicht (4) gegenüber dem Profilband (1) farblich abgesetzt ist.

13. Stützwendel nach einem der Ansprüche 1 bis 12, **dadurch gekennzeichnet, dass** die Funktionsschicht (4) eine Breite (b) von 0,5 bis 3 mm, vorzugsweise von 1,5 bis 2,5 mm aufweist.

14. Stützwendel nach einem der Ansprüche 1 bis 13, **dadurch gekennzeichnet, dass** die Funktionsschicht (4) eine Dicke (s) von 0,1 bis 1,0 mm, vorzugsweise von 0,2 mm bis 0,3 mm aufweist.

## Claims

1. Helical support having a spirally wound profiled band (1) which is welded along a spiral contact face which is formed by adjacent profiled-band sections, with the formation of at least one welded seam (2), and forms, as a result, an at least substantially cylindrical cavity (4), the profiled band (1) being provided with at least one functional layer (4) in the region of the welded seam (2), **characterized in that** the material of the functional layer (4) has a lower melting point or melting range than the material of the profiled band (1).

2. Helical support according to claim 1, **characterized in that**, in the welded state, the functional layer (1) is oriented substantially radially with respect to the cylindrical cavity (3).

3. Helical support according to claim 1 or 2, **characterized in that**, in the welded state, the functional layer (1) is arranged **in that** inner edge region of the helical support which faces the cylindrical cavity (3).

4. Helical support according to one of claims 1 to 3, **characterized in that** the profiled band (1) is composed of a polyolefin, preferably polyethylene.

5. Helical support according to one of claims 1 to 4, **characterized in that** the functional layer (4) is composed of a polyolefin, preferably polyethylene.

6. Helical support according to one of claims 1 to 5, **characterized in that** tube profiled band (1) has a hollow-chamber profile in cross section.

7. Helical support according to Claim 6, **characterized in that** the profiled band (1) has at least one projection (6) which protrudes into the hollow chamber (5).

8. Helical support according to one of claims 1 to 7, **characterized in that** the profiled band (1) has undercuts (7) in cross section, with the result that adjacent profiled-band sections engage in one another in the welded state of the profiled band (1).

9. Helical support according to one of claims 1 to 8, **characterized in that** the profiled band (1) has a print, preferably an inkjet print, on its side which faces the cylindrical cavity (3) in the welded state.

10. Helical support according to one of Claims 1 to 9, **characterized in that** the functional layer (4) is coextruded with the profiled band (1).

11. Helical support according to one of claims 1 to 10, **characterized in that** at least two functional layers (4) are provided which are arranged on both sides on the profiled band (1) in the werded-seam region.

12. Helical support according to one of claims 1 to 11, **characterized in that** the functional layer (4) is in a different colour with respect to the profiled band (1).

13. Helical support according to one of Claims 1 to 12, **characterized in that** the functional layer (4) has a width (b) of from 0.5 to 3 mm, preferably of from 1.5 to 2.5 mm.

14. Helical support according to one of claims 1 to 13, **characterized in that** the functional layer (4) has a thickness (s) of from 0.1 to 1.0 mm, preferably of from 0.2 mm to 0.3 mm.

## Revendications

1. Enroulement de support comprenait une bande profilée (1) enroulée en spirale, qui est soudée le long d'une surface de contact hélicoidale formée par des portions adjacents de la bande profilée en formant au moins un joint de soudure (2) et qui forme ainsi une cavité (4) au moins sensiblement cylindrique, la bande profilée (1) étant pourvue, dans la région du joint de soudure (2), d'au moins une couche fonctionnelle (4),
**caractérisé en ce qui**
le matériau de la couche fonctionnelle (4) présent un point de fusion ou une plage de ramollissement inférieur(e) à celui ou celle du matériau de la bande profilée (1).

2. Enroulement de support selon la revendication 1, **caractérisé en ce que** la couche fonctionnelle (1), dans l'état soudé, est orientée sensiblement radicalement par rapport à la cavité cylindrique (3).

3. Enroulement de support selon la revendication 1 ou 2, **caractérisé en ce que** la couche fonctionelle (1), dans l'état soudé, est disposée dans la région de bord intérieur de l'enroulement de: support tournée vers la cavité cylindrique (3).

4. Enroulement de support selon l'une quelconque des revendications 1 à 3, **caractérisé en ce que** la bande profilée (1) se compose d'une polyoléfine, de préférence de polyéthylène.

5. Enroulement de support selon l'une quelconque des revendications 1 à 4, **caractérisé en ce que** la couche fonctionnelle (4) se compose d'une polyoléfine, de préférence de polyéthylène.

6. Enroulement de support selon l'une quelconque des revendications 1 à 5, **caractérise en ce que** la bande profilée (1.) présente un profil de chambre creuse en section transversale.

7. Enroulement de support selon à revendication 6, **caractérisé en ce que** la bandé profilée (1) présente au moins une saillie (6) pénétrant dans la chambre creuse (5).

8. Enroulement de support selon l'une quelconque des revendications 1 à 7, **caractérisé en ce que** la bande, profilée (1) présente, en section transversale, des contre-dépouilles (7), de sorte que dans l'état soudé de la brande profilée (1), des portions de bandes profilée adjacentes s'engagent les unes dans les autres.

9. Enroulement de support selon l'une quelconque des revendications 1 à 8, **caractérisé en ce que** la bande profilée (1) présente, sur son coté tourné vers la cavité cylindrique (3) dans l'état soudé, une impression, de préférence une impression à jet d'encre.

10. Enroulement de support selon l'une quelconque des revendications 1 à 9, **caractérisé en ce que** la couche fonctionnelle (4) est co-extrudée avec la bande profilée (1).

11. Enroulement de support selon l'une quelconque des revendications 1 à 10, **caractérisé en ce qu'**au moins deux couches fonctionnelles (4) sont prévues, lesquelles sont disposera dans la région du joint de soudure de chaque côte de la bande profitée (1).

12. Enroulement, de support selon l'une quelconque des revendications 1 à 11, **caractérisé en ce que** la couche fonctionnelle (4) se distingue de la bande profilée (1) par sa couleur.

13. Enroulement de support selon l'une quelconque des revendications 1 à 12, **caractérisé en ce que** la couche fonctionnelle (4) présente une largeur (b) de 0,5 à 3 mm, de préférence de 1,5 à 2,5 mm.

14. Enroulement de support selon l'une quelconque des revendications 1 à 13, **caractérisé en ce que** la couche fonctionnelle (4) présente une épaisseur (s) de 0,1 à 1,0 mm, de préférence de 0,2 mm à 0,3 mm.
